# EUROPÄISCHE PATENTSCHRIFT

(11) **EP 1 802 884 B1**
(45) Veröffentlichungstag und Bekanntmachung des Hinweises auf die Patenterteilung: **21.01.2009**
(21) Anmeldenummer: 05795393.7
(22) Anmeldetag: 06.10.2005
(51) Int. Cl.: F16D 65/092

(54) **BREMSBELAG MIT TYPENSCHILD**
BRAKE PAD WITH A TYPE PLATE
GARNITURE DE FREIN A PLAQUE SIGNALETIQUE

(30) Priorität: 11.10.2004 DE 102004049657
(43) Veröffentlichungstag der Anmeldung: 04.07.2007
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2005/010753
(87) Internationale Veröffentlichungsnummer: WO 2006/040062

(56) Entgegenhaltungen:
- EP-A- 0 429 110
- DE-A1- 2 405 379

## Beschreibung

Die Erfindung bezieht sich auf einen Bremsbelag für eine Scheiben- oder Trommelbremse, der aus einem Bremsbelagträger und einer daran festgelegten, beim Bremsvorgang die Bremsfläche der Bremse kontaktierende Bremsmaterialschicht besteht.

Die Bremswirkung beruht auf den Reibeffekt, da beim Bremsvorgang die Bremsbeläge an die Bremsfläche gedrückt werden. Bei einer Scheibenbremse ist dies eine mit dem Rad mitlaufende Scheibe, während bei einer Trommelbremse die segmentartig gestalteten Bremsbeläge an die Innenfläche der Bremstrommel gedrückt werden. Die Bremsmaterialschicht ist bei einer Scheibenbremse zu einer Platte und bei einer Trommelbremse zu einem Kreissegment geformt.

Bei Bremsen handelt es sich um sicherheitsrelevante Bauteile, so dass die Qualitätssicherung der Bauteile einer Bremse ein wichtiger Aspekt ist. Aus Gründen der Sicherheit ist zudem eine Kontrolle der Bremsbeläge in vorgegebenen Intervallen notwendig. Darüber hinaus ist auch äußerst wichtig, dass der Herstellprozess, insbesondere der Bremsmaterialschicht, jederzeit zurückverfolgt werden kann. Aus diesem Grunde werden die Bremssättel oder die Bremsgehäuse normalerweise mit Typenschildern versehen. Dabei ist es dann wichtig, dass diese Identifikationsmerkmale auch nach einer relativ langen Einsatzzeit des Fahrzeuges noch lesbar sind. Bevorzugt werden diese Typenschilder aus einem korrosionsbeständigen Material gefertigt und werden, sofern es möglich ist, an geschützten Stellen der Bremse oder des Fahrzeuges angebracht.

Die Bremsmaterialschichten sind aus einem nicht metallischen Material gefertigt, dessen Reibungskoeffizient zur Erzielung einer hohen Bremskraft relativ hoch ist. Die Bremsmaterialschicht wird im Zuge der Herstellung an den Bremsbelagträger angesetzt. Dieser Bremsbelagträger ist üblicherweise aus Stahl gefertigt.

Bei den in Rede stehenden Bremsbelägen wird die Bezeichnung des Bremsmaterials auf einem Belagträgerblech eingestanzt. Die genaue Chargenbezeichnung der Bremsmaterialschicht wird hingegen häufig nur aufgedruckt, da diese erst nach dem Aufpressen des Bremsmaterials auf die Trägerplatte feststeht und dann ein Aufprägen nicht mehr ohne weiteres möglich ist, da die Gefahr besteht, dass sich der Bremsbelagträger verbiegt, wodurch es zum Ablösen der Bremsmaterialschicht kommen könnte.

Es hat sich jedoch herausgestellt, dass die aufgedruckte Chargenbezeichnung der Bremsmaterialschicht häufig schon nach kurzer Einsatzzeit des Fahrzeuges nicht mehr lesbar oder gar nicht vorhanden ist, insbesondere dann, wenn die Bremsbeläge einer relativ hohen thermischen Belastung oder einer Rüttelbeanspruchung ausgesetzt wurden. Es ist deshalb auch schon praktiziert worden, die genaue Chargenbezeichnung der Bremsmaterialschicht durch ein sogenanntes Aufnadeln festzuhalten. Auch bei dieser Methode besteht noch das zuvor angesprochene Problem, da die einzelnen Nadelpunkte nicht sehr tief in das Material eingebracht werden können und somit bei einer Korrosions- oder Reibbeanspruchung verschwinden können.

Um die zuvor geschilderte Problematik zu lösen, wäre es denkbar, dass am Bremsbelag ebenfalls ein nach Art eines Typenschildes gestaltetes Schild angebracht wird. Die Anbringung eines solchen Schildes kann jedoch nicht an der Oberfläche des Bremsbelagträgers erfolgen, da diese Fläche zumindest bei einer Scheibenbremse für die Einleitung der Zuspannkraft benötigt wird. Außerdem wäre ein solch exponiert angebrachtes Schild nicht vor Beschädigungen geschützt.

Das Dokument EP 0429110 offenbart einen Bremsbelag gemäß dem Oberbegriff des Anspruch 1.

Der Erfindung liegt die Aufgabe zugrunde, einen Bremsbelag der eingangs näher beschriebenen Art so zu gestalten, dass während der gesamten Lebensdauer der Bremse die genaue Chargenbezeichnung der Bremsmaterialschicht erkennbar ist.

Die gestellte Aufgabe wird durch den Gegenstand des Anspruchs 1 gelöst. Danach ist der Bremsbelagträger mit einem Durchbruch oder mit einer an der der Bremsmaterialschicht zugewandten Seite liegenden Aussparung versehen, worin eine belagsspezifische Informationen wiedergebende Plakette eingesetzt ist.

Die in den Bremsbelagträger eingebrachte Aussparung oder der Durchbruch gestatten es nunmehr, dass die Plakette an einer geschützten Stelle angebracht wird, so dass die Plakette keinerlei Beschädigungen ausgesetzt ist. Dadurch können die enthaltenen Informationen, beispielsweise Ziffern und/oder Buchstaben, jederzeit erkannt werden. Die Herstellung des Durchbruches oder der Aussparung kann in einfacher Weise in den Fertigungsablauf im Zuge des Herstellens des Bremsbelages erfolgen. Da die Plakette innerhalb des Bremsbelagträgers liegt, ist sie an einer geschützten Stelle untergebracht, so dass kein Verschleiß oder eine Beschädigung auftritt. Der Kostenaufwand kann vernachlässigt werden, da der Materialbedarf für die Plakette äußerst gering ist.

Eine Bremse, für die sich die erfindungsgemäßen Beläge beispielsweise eignen, zeigt die EP 10531321.

In einer bevorzugten Ausführungsform ist die Plakette als Prägeplakette ausgebildet. Die wiederzugebenden Informationen werden dann mittels eines allgemein bekannten Prägeverfahrens eingebracht, wobei eine möglichst hohe Tiefe für die Ziffern und Buchstaben und eventuell auch Symbole möglich ist. Der Prägevorgang kann ebenfalls in einfachster Weise in den Fertigungsablauf der Herstellung des Bremsbelages eingebracht werden. Für den Prägevorgang können die üblichen Apparaturen verwendet werden, da vorgesehen ist, dass die Härte des Plakettenmaterials geringer ist als die Härte des Bremsbelagträgers.

Die Lebensdauer der Bremsbeläge eines Fahrzeuges, insbesondere eines Nutzfahrzeuges, ist relativ hoch. Damit auch die Informationen nach einer relativ langen Nutzungsdauer problemlos erkannt werden können, ist vorgesehen, dass die Plakette aus einem korrosions- sowie temperaturbeständigen Material besteht. Ein derartiges Material wäre beispielsweise Aluminium.

Sofern der Bremsbelagträger mit einer Aussparung versehen ist, sollte die Tiefe so groß sein, dass die Plakette vollständig innerhalb der Aussparung liegt, das heißt, die der Bremsmaterialschicht zugewandt liegenden Erhöhungen sollten gegenüber der Kontaktfläche zwischen dem Bremsbelagträger und der Bremsmaterialschicht zum Inneren des Bremsbelagträgers verspringen. Sofern der Bremsbelagträger jedoch mit einem Durchbruch versehen ist, sollte dieser stufenförmig ausgebildet sein, wobei der größte Querschnitt der Bremsmaterialschicht zugewandt liegt. Dadurch entsteht eine Auflagefläche für den Randbereich der Plakette. Dieser Randbereich sollte zwar noch an der Auflagefläche festgelegt werden, beispielsweise durch Klebung, obwohl es nicht unbedingt erforderlich ist, da durch die stufenförmige Ausbildung des Durchbruches eine in sich geschlossene Kammer gebildet wird.

Anhand der beiliegenden Zeichnungen wird die Erfindung noch näher erläutert. Es zeigen:
- Figur 1: den Bremsbelagträger in einer Stirnansicht mit Blick auf die Kontaktfläche zum Bremsbelag, und
- Figur 2: einen Schnitt längs der Linie II-II in der Figur 1.

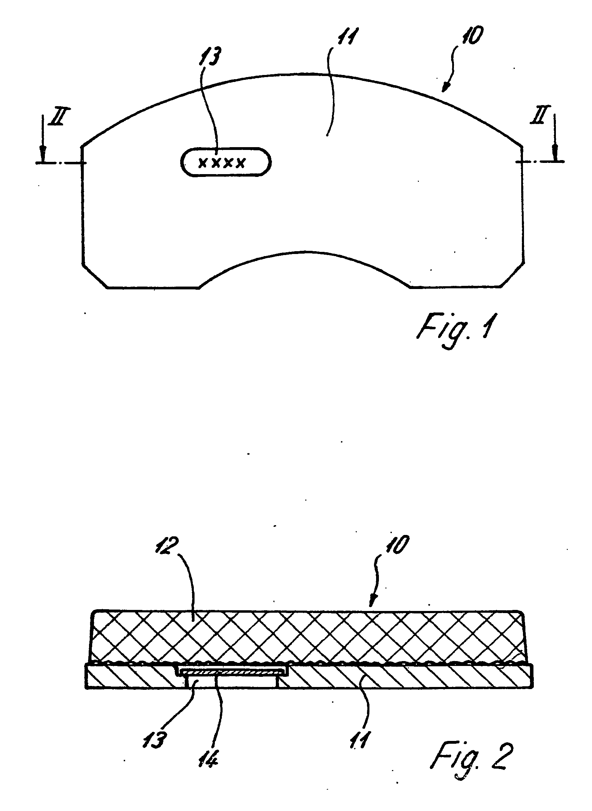

Der in den Figuren dargestellte Bremsbelag 10 ist plattenförmig gestaltet und für eine Scheibenbremse ausgelegt. Der Bremsbelag 10 besteht aus einem plattenförmigen Bremsbelagträger 11, der üblicherweise aus Stahl gefertigt ist und einer Bremsmaterialschicht 12 mit einem hohen Reibkoeffizienten. Der Bremsbelagträger 11 ist in bekannter Weise mit der Bremsmaterialschicht 12 verbunden. Der Bremsbelagträger 11 ist im dargestellten Ausführungsbeispiel mit einem Durchbruch 13 ausgestattet, welcher gemäß der Figur 1 langlochförmig gestaltet ist. Die Figur 2 zeigt, dass der Durchbruch 13 stufenförmig ausgebildet ist, wobei der größere Querschnitt der Bremsmaterialschicht 12 zugewandt liegt. In den Durchbruch 13 ist eine Plakette 14 eingelegt, deren Randbereiche sich auf der Auflagefläche abstützen. Diese Plakette 14 kann die notwendigen Informationen enthalten, wie durch die Schriftzeichen in der Figur 1 angedeutet ist. Diese Informationen geben normalerweise die genaue Chargenbezeichnung der Bremsmaterialschicht 12 wieder. Die Randbereiche der Plakette 14 können mit der Auflagefläche des Durchbruches 13 fest verbunden sein, beispielsweise durch eine Klebeschicht. Im Gegensatz zu der dargestellten Ausführung könnte der Bremsbelagträger 11 mit einer Aussparung versehen sein, wobei die Tiefe so groß sein muss, dass die Plakette 14 vollständig innerhalb der Aussparung liegt.

Der dargestellte Bremsbelag 10 ist für eine Scheibenbremse ausgelegt. Sofern er für eine Trommelbremse eingesetzt werden soll, wäre der Bremsbelagträger 11 und die Bremsmaterialschicht 12 kreissegmentförmig gestaltet.

Die Erfindung ist nicht auf das dargestellte Ausführungsbeispiel beschränkt. Wesentlich ist, dass im Bremsbelagträger 11 ein Durchbruch 13 oder eine Aussparung zur Aufnahme der Plakette 14 vorgesehen ist. Die Plakette 14 sollte aus einem solchen Material bestehen, wodurch die Plakette 14 in sich formstabil ist.

## Patentansprüche

1. Bremsbelag (10) für eine Scheiben- oder eine Trommelbremse, der aus einem Bremsbelagträger (11) und einer daran festgelegten, beim Bremsvorgang eine Bremsfläche der Bremse kontaktierenden Bremsmaterialschicht (12) besteht, **dadurch gekennzeichnet, dass** der Bremsbelagträger (11) mit einem Durchbruch (13) oder an der der Bremsmaterialschicht (12) zugewandten Seite mit einer Aussparung versehen ist, worin eine belagsspezifische Informationen wiedergebende Plakette (14) eingesetzt ist.

2. Bremsbelag nach Anspruch 1, **dadurch gekennzeichnet, dass** die Plakette (14) als Prägeplakette ausgebildet ist.

3. Bremsbelag nach Anspruch 2, **dadurch gekennzeichnet, dass** die Härte des Materials der Plakette (14) geringer ist als die Härte des Bremsbelagträgers (11).

4. Bremsbelag nach einem oder mehreren der vorhergehenden Ansprüche 1 bis 3, **dadurch gekennzeichnet, dass** die Plakette (14) aus einem korrosionssowie temperaturbeständigen Material besteht.

5. Bremsbelag nach einem oder mehreren der vorhergehenden Ansprüche 1 bis 4, **dadurch gekennzeichnet, dass** der Bremsbelagträger (11) aus Stahl und die Plakette (14) aus Aluminium besteht.

6. Bremsbelag nach einem oder mehreren der vorhergehenden Ansprüche 1 bis 5, bei der der Bremsbelagträger (11) mit einem Durchbruch (13) versehen ist, **dadurch gekennzeichnet, dass** der Durchbruch (13) zur Bildung einer Auflagefläche für den Randbereich der Plakette (14) stufenförmig ausgebildet ist.

7. Bremsbelag nach einem oder mehreren der vorhergehenden Ansprüche 1 bis 6, **dadurch gekennzeichnet, dass** der Durchbruch (13) oder die Aussparung langlochförmig gestaltet sind.

## Claims

1. Brake lining (10) for a disc or drum brake, consisting of a brake lining carrier (11) and a brake material layer (12) fixed on said carrier and contacting a braking surface of the brake during brake application, **characterised in that** said brake lining carrier (11) is provided with a breakthrough (13) or with a recess on the side facing said brake material layer (12), into which recess a plate (14) is inserted which displays lining-specific information.

2. Brake lining according to Claim 1, **characterised in that** said plate (14) is configured as embossed plate.

3. Brake lining according to Claim 2, **characterised in that** the hardness of the material of said plate (14) is lower than the hardness of said brake lining carrier (11).

4. Brake lining according to one or several of the preceding Claims 1 to 3, **characterised in that** said plate (14) is made of a corrosion-resistant and temperature-resistant material.

5. Brake lining according to one or several of the preceding Claims 1 to 4, **characterised in that** said brake lining carrier (11) is made of steel and said plate (14) consists of aluminium.

6. Brake lining according to one or several of the preceding Claims 1 to 5, wherein said brake lining carrier (11) is provided with a breakthrough, **characterised in that** said breakthrough (13) has a step-shaped configuration for forming a supporting surface for the marginal zone of said plate (14).

7. Brake lining according to one or several of the preceding Claims 1 to 6, **characterised in that** said breakthrough (13) or said recess have the shape of an elongate hole.

## Revendications

1. Garniture de frein (10) pour un frein à disque ou tambour, composée d'un support de garniture de frein (11) et d'une couche en matériau de frein (12) fixée audit support et venant en contact avec une aire de freinage du frein au cours de serrage de frein, **caractérisée en ce que** ledit support de garniture de frein (11) est pourvu d'une ouverture percée (13) ou d'un creux de son côté en face de ladite couche en matériau de frein (12), dans lequel une plaque (14) est insérée, qui signale des informations spécifiques de la garniture.

2. Garniture de frein selon la revendication 1, **caractérisée en ce que** ladite plaque (14) est configurée sous forme d'une plaque frappée.

3. Garniture de frein selon la revendication 2, **caractérisée en ce que** la dureté du matériau de ladite plaque (14) est inférieure que la dureté dudit support de garniture de frein (11).

4. Garniture de frein selon une ou plusieurs des revendications précédentes 1 à 3, **caractérisée en ce que** ladite plaque (14) est faite en un matériau résistant à la corrosion et à résistance thermique.

5. Garniture de frein selon une ou plusieurs des revendications précédentes 1 à 4, **caractérisée en ce que** ledit support de garniture de frein (11) est faite en acier et que ladite plaque (14) consiste en aluminium.

6. Garniture de frein selon une ou plusieurs des revendications précédentes 1 à 5, dans laquelle ledit support de garniture de frein (11) est pourvu d'une ouverture percée, **caractérisée en ce que** ladite ouverture percée (13) présente une configuration à gradins afin de former une aire d'appui pour la zone marginale de ladite plaque (14).

7. Garniture de frein selon une ou plusieurs des revendications précédentes 1 à 6, **caractérisée en ce que** ladite ouverture percée (13) ou ledit creux présentent la forme d'un trou oblong.
